# EUROPÄISCHE PATENTSCHRIFT

(11) **EP 4 163 165 B1**
(45) Veröffentlichungstag und Bekanntmachung des Hinweises auf die Patenterteilung: **18.03.2026**
(21) Anmeldenummer: 21201711.5
(22) Anmeldetag: 08.10.2021
(51) Int. Cl.: B60T 8/17, B60T 8/18, B60T 8/32

(54) **VERFAHREN UND EINRICHTUNG ZUR SICHEREN FAHRZEUGÜBERWACHUNG**
METHOD AND DEVICE FOR SECURE VEHICLE MONITORING
PROCÉDÉ ET DISPOSITIF DE SURVEILLANCE SÉCURISÉE DE VÉHICULES

(43) Veröffentlichungstag der Anmeldung: 12.04.2023
(73) Patentinhaber: Siemens Mobility GmbH, 80997 München (DE)
(72) Erfinder: Schroeder-Bodenstein, Kaspar, 40547 Düsseldorf (DE); Stingl, Bernhard Andreas, 47803 Krefeld (DE); Ketzel, Andreas, 90411 Nürnberg (DE); Knoll, Markus, 96172 Mühlhausen (DE); Wiesand, Manfred, 90559 Burgthann (DE); Schinagl, Gerhild, 8046 Stattegg (AT)
(74) Vertreter: Siemens Patent Attorneys

(56) Entgegenhaltungen:
- JP-A- 2015 509 884
- US-A- 5 833 325
- US-B2- 9 327 738

## Beschreibung

Die Erfindung betrifft ein Verfahren zur Fahrzeugüberwachung, wobei Bremsdrücke, Bremskräfte oder Bremsmomente eines Reibungsbremssystems, umfassend zumindest ein erstes Reibelement und ein zweites Reibelement, eines spurgeführten Fahrzeugs, insbesondere eines Schienenfahrzeugs, und kinematische Größen des Fahrzeugs erfasst werden und wobei aus den Bremsdrücken, Bremskräften oder Bremsmomenten und aus den kinematischen Größen Werte zumindest einer ersten Belastungsgröße des Reibungsbremssystems ermittelt werden.

Spurgeführte Fahrzeuge, insbesondere Schienenfahrzeuge, sind häufig mit Reibungsbremssystemen ausgerüstet, bei denen durch das Gegeneinanderdrücken von Reibelementen eine Bremswirkung auf ein Fahrzeug ausgelöst wird, d.h. eine kinetische Energie des Fahrzeugs in thermische Energie umgewandelt wird. Bekannte Ausführungsformen von Reibungsbremssystemen sind z.B. pneumatische Klotzbremsen oder Scheibenbremsen. Klotzbremsen wirken auf Räder des Fahrzeugs, welche insbesondere bei hohen Bremsausgangsgeschwindigkeiten und großen Bremskräften thermomechanisch stark belastet und beansprucht werden.

Regeln für eine Validierung klotzgebremster Räder sind in der Europäischen Norm (EN) 13979-1 genannt, in welcher von einer Identifikation von größten im Normalbetrieb eines Schienenfahrzeugs auftretenden thermomechanischen Belastungen der Räder ausgegangen wird.

Laut der EN 15734-1 müssen bei Hochgeschwindigkeitszügen von Klotzbremsen bewirkte Energieeinträge in die Räder durch Steuerungsmittel begrenzt werden.

Aus dem Stand der Technik ist beispielsweise die WO 2018/054736 A1 bekannt, in welcher ein Verfahren zur Beeinflussung eines kinematischen Verhaltens eines Schienenfahrzeugs beschrieben ist. Auf Basis eines ermittelten Energieeintrags in ein Reibelement kann das kinematische Verhalten des Schienenfahrzeugs dahingehend beeinflusst werden, dass eine Fahrgeschwindigkeit des Schienenfahrzeugs begrenzt wird.

Der genannte Ansatz weist in seiner bekannten Form den Nachteil auf, dass die Beeinflussung des kinematischen Verhaltens des Schienenfahrzeugs lediglich als betriebliche Fahrtbegrenzung im Hinblick auf eine zulässige Fahrgeschwindigkeit, eine zulässige Verzögerung und/oder ein zulässiges Fahrprofil des Schienenfahrzeugs vorgenommen wird.

Ferner zeigt die WO 2016/119929 A1 ein Verfahren zur Prognose von Bremsbelagverschleiß bei einem Schienenfahrzeug, bei welchem eine Verschleißrate auf Basis einer Bremsleistung ermittelt werden kann.

Es handelt sich jedoch um kein Verfahren zum Überlastungsschutz und es erfolgen daher keine Eingriffe in ein Fahrverhalten des Schienenfahrzeugs.

Darüber hinaus zeigt das US 9,327,738 B2 ein Bremssteuergerät, welches auf Basis einer Erfassung einer Beanspruchung einer Bremse während eines Bremsvorgangs einen Bremsenverschleiß ermittelt und speichert. Mittels des Bremssteuergeräts werden einzelne Bremseinheiten auf Grundlage des ermittelten Bremsenverschleißes asymmetrisch angesteuert, um eine Bremsenverschleißverteilung auszubalancieren.

Weiterhin beschreibt die US 5,833,325 A eine Bremsvorrichtung für Güterzüge, bei welcher aus einem Bremssignal, welches eine Bremsanforderung repräsentiert, und einem Nettobremsverhältnis eines Zugs mittels eines Prozessors ein Bremszylinderdruck ermittelt wird. Mittels des Bremszylinderdrucks wird eine Bremsbackenkraft gebildet. Das Bremssignal repräsentiert Betriebsbremsanforderungen.

Der Erfindung liegt daher die Aufgabe zugrunde, ein gegenüber dem Stand der Technik weiterentwickeltes Verfahren zur Fahrzeugüberwachung anzugeben, mit welchem ein besonders hohes Sicherheits- und Zuverlässigkeitsniveau erreicht wird und welches auch für klotzgebremste Fahrzeuge im Hochgeschwindigkeitsbetrieb einsetzbar ist.

Erfindungsgemäß wird diese Aufgabe gelöst mit einem Verfahren nach Anspruch 1, bei dem mit den Werten der zumindest ersten Belastungsgröße Grenzwertvergleiche durchgeführt werden, wobei als Schutzreaktion eine ein vereinbartes Sicherheitsniveau gewährleistende Bremsung des Fahrzeugs dann instruiert oder ausgelöst wird, wenn zumindest ein Grenzwertvergleichskriterium erfüllt ist.

Dadurch wird eine drohende Überlastung des Reibungsbremssystems rechtzeitig erkannt und mittels eines geeigneten Bremseingriffs, durch den ein sicherer Zustand des Fahrzeugs erreicht wird, verhindert.

Die das vereinbarte Sicherheitsniveau gewährleistende Bremsung wird als Schnellbremsung durchgeführt, welche von einem Triebfahrzeugführer oder, als Zwangsbremsung, automatisch bzw. selbsttätig eingeleitet wird.

Dadurch wird das Reibungsbremssystem effektiv vor Überlastung bzw. Überbeanspruchung geschützt und kann auch für Fahrzeuge im Hochgeschwindigkeitsbetrieb eingesetzt werden. Insbesondere, aber nicht ausschließlich für klotzgebremste Fahrzeuge ist ein Einsatz des erfindungsgemäßen Verfahrens nützlich.

Ein aufgrund einer erforderlichen Bremswegeinhaltung des Fahrzeugs gefährliches Abschalten des Reibungsbremssystems während einer Fahrt des Fahrzeugs aufgrund einer Überlastung bzw. Überbeanspruchung wird vermieden.

Ein Risiko für einen unsicheren Zustand des Fahrzeugs wird auch bei einer weiteren Ansteuerung des Reibungsbremssystems in dem sicheren Zustand vermieden, wenn die Bremsung auf eine Zielfahrgeschwindigkeit des Fahrzeugs oder in den Stillstand des Fahrzeugs instruiert oder ausgelöst wird und durchgeführt wird, wobei bei der Zielfahrgeschwindigkeit oder bei Fahrgeschwindigkeiten des Fahrzeugs kleiner als die Zielfahrgeschwindigkeit selbst bei Maximalbremsdrücken, Maximalbremskräften oder Maximalbremsmomenten des Reibungsbremssystems in Ermittlung der Werte der zumindest ersten Belastungsgröße eine Zunahme der Werte der zumindest ersten Belastungsgröße ausgeschlossen ist.

Das Fahrzeug kann beispielsweise auf eine geringe Fahrgeschwindigkeit als Zielfahrgeschwindigkeit abgebremst werden und mit dieser Zielfahrgeschwindigkeit weiterfahren, während das Reibungsbremssystem abkühlt. Es ist rechnerisch und, wenn keine unberücksichtigten Fehler, Störungen oder sonstige Sonderereignisse des Reibungsbremssystems auftreten, auch real ausgeschlossen, dass bei einer weiteren Verringerung der Fahrgeschwindigkeit eine Überlastung bzw. Überbeanspruchung des Reibungsbremssystems eintritt. Der zumindest rechnerisch sichere Zustand bleibt zumindest solange erhalten, bis das Fahrzeug wieder beschleunigt und eine Bremsung aus einer Bremsausgangsgeschwindigkeit oberhalb der Zielfahrgeschwindigkeit durchführt.

Die Bremsung kann auch bis in den Stillstand des Fahrzeugs instruiert oder ausgelöst werden und durchgeführt werden.

Eine einfach umzusetzende Prüfung im Hinblick auf ein etwaiges Erfordernis der Schutzreaktion erreicht man beispielsweise, wenn ein erstes Grenzwertvergleichskriterium dann erfüllt ist, wenn zumindest ein erster Belastungswert der zumindest ersten Belastungsgröße gleich groß wie oder größer als ein erster Belastungsgrenzwert ist.

Hilfreich ist es aber auch, wenn aus den Bremsdrücken, Bremskräften oder Bremsmomenten und aus den kinematischen Größen Werte einer zweiten Belastungsgröße des Reibungsbremssystems ermittelt werden, wobei die erste Belastungsgröße und die zweite Belastungsgröße physikalische Größen unterschiedlicher Kategorien sind, wobei mit den Werten der zweiten Belastungsgröße Grenzwertvergleiche durchgeführt werden, wobei ein zweites Grenzwertvergleichskriterium dann erfüllt ist, wenn zumindest ein zweiter Belastungswert der zweiten Belastungsgröße gleich groß wie oder größer als ein zweiter Belastungsgrenzwert ist. Dadurch wird ein aus zwei unterschiedlichen Belastungsgrößen kombiniertes Verfahren erreicht, welches eine Redundanz in Erkennung und Verhinderung einer Überlastung bzw. Überbeanspruchung des Reibungsbremssystems bewirkt. Es können dadurch auch voneinander verschiedene Überlastungsvorgänge bzw. Überbeanspruchungsvorgänge detektiert und berücksichtigt werden. Beispielsweise kann über die erste Belastungsgröße ein sich längerfristig aufbauender Lastzustand realistisch eingeschätzt werden, über die zweite Belastungsgröße können beispielsweise kurzfristige, momentan auftretende Lastspitzen erkannt werden.

Erfindungsgemäß wird eine Lösung erreicht, wenn als Werte der zumindest ersten Belastungsgröße Werte basierend auf thermischen Energieinhalten des Reibungsbremssystems ermittelt werden.

Durch diese Maßnahme kann auf eine aufwendige oder zusätzliche Installation von Sensoren in dem Fahrzeug verzichtet werden, da Parameter, die zur Ermittlung der Werte, die auf thermischen Energieinhalten basieren, erforderlich sind (beispielsweise Bremsdrücke und Drehzahlen bzw. Winkelgeschwindigkeiten oder Fahrgeschwindigkeiten) in dem Fahrzeug verfügbar sind bzw. aufwandsarm erfasst werden können.

Weiterhin können dadurch übermäßige betriebliche Belastungen bzw. Beanspruchungen des Reibungsbremssystems detektiert werden (z.B. anhand eines anschwellenden thermischen Energieinhalts des ersten Reibelements aufgrund einer das Reibungsbremssystem besonders belastenden bzw. beanspruchenden Sequenz an starken Betriebsbremsungen des Fahrzeugs).

Im Zusammenhang mit der Ermittlung von auf thermischen Energieinhalten basierenden Werten werden gemäß der Erfindung die Werte der ersten Belastungsgröße als Summe der Differenzen zwischen Energieeinträgen in das erste Reibelement und von dem ersten Reibelement abgegebener Wärme ermittelt.

Aufgrund einer Berücksichtigung der von dem ersten Reibelement abgegebenen Wärme wird eine Überschätzung der thermischen Energien des ersten Reibelements vermieden. Risiken in Bezug auf eine ungerechtfertigte Auslösung der ersten Schutzreaktion werden dadurch reduziert.

Eine rasche und zuverlässige Erkennung von Vorgängen und Zuständen, welche zu einer Überlastung bzw. Überbeanspruchung des Reibungsbremssystems führen können, wird ermöglicht, wenn als Werte der zweiten Belastungsgröße Reibleistungswerte des Reibungsbremssystems ermittelt werden.

Durch diese Maßnahme können beispielsweise Fehler des Reibungsbremssystems festgestellt werden (z.B. anhand von übermäßigen Bremsdrücken, welche zu exzessiven Reibleistungen führen).

Günstig ist es ferner, wenn der erste Belastungsgrenzwert in einer Weise definiert ist, dass eine Summe aus dem aktuellen ersten Belastungswert und einem Belastungsvorhaltewert der zumindest ersten Belastungsgröße, welcher einer erwarteten Belastung des Reibungsbremssystems durch die Bremsung entspricht, gleich groß wie oder kleiner als ein Maximalbelastungsgrenzwert der zumindest ersten Belastungsgröße ist.

Durch diese Maßnahme wird erreicht, dass die Schutzreaktion ohne Überlastung bzw. Überbeanspruchung des Reibungsbremssystems umgesetzt werden kann. Die Schutzreaktion selbst führt zu keinem zusätzlichen Risiko einer Überlastung bzw. Überbeanspruchung des Reibungsbremssystems. Das Fahrzeug kann gefahrlos in den sicheren Zustand überführt werden und danach (beispielsweise nach einer Abkühlphase des Reibungsbremssystems) zuverlässig wieder in Betrieb genommen werden.

Hilfreich ist es darüber hinaus, wenn der Belastungsvorhaltewert abhängig von zumindest einem Bremsparameter, insbesondere abhängig von einem Bremsblending, einer Beladung des Fahrzeugs oder/und einer Streckenneigung ist.

Durch diese Maßnahme wird eine besonders realistische Einschätzung der Belastung bzw. Beanspruchung des Reibungsbremssystems aufgrund eines definierten Bremsszenarios ermöglicht. Es können beispielsweise Bremsszenarien berücksichtigt werden, welche eine besonders starke thermomechanische Belastung bzw. Beanspruchung des Reibungsbremssystems verursachen (z.B. Schnellbremsungen während einer Gefällefahrt des Fahrzeugs).

Eine günstige Lösung wird weiterhin erzielt, wenn als Vorreaktion eine Geschwindigkeitsbegrenzung des Fahrzeugs dann instruiert oder ausgelöst wird, wenn zumindest der erste Belastungswert gleich groß wie oder größer als ein erster Belastungsschwellwert der zumindest ersten Belastungsgröße ist, wobei der erste Belastungsschwellwert kleiner als der der erste Belastungsgrenzwert ist.

Durch diese Maßnahme wird eine Hierarchie aus Reaktionen auf eine drohende Überlastung des Reibungsbremssystems bewirkt, welche je nach Schwergrad der Belastung und Beanspruchung des Reibungsbremssystems eingesetzt werden können. So ist sichergestellt, dass die Schutzreaktion nur dann zur Anwendung kommt, wenn ein schwerwiegender Fehler des Reibungsbremssystems vorliegt, welcher bei ausbleibender Reaktion Schäden an dem Reibungsbremssystem verursachen kann. Darüber hinaus werden durch die Vorreaktion Risiken im Hinblick auf eine allmähliche, sich langsam entwickelnde Schädigung des Reibungsbremssystems präventiv reduziert.

Die Geschwindigkeitsbegrenzung kann temporär umgesetzt werden und beispielsweise durch gezieltes Abschalten von Antrieben des Fahrzeugs und/oder Betriebsbremsungen des Fahrzeugs erreicht werden.

Eine vorteilhafte Ausgestaltung erhält man ferner, wenn nach einem Abstellen des Fahrzeugs Werte der zumindest ersten Belastungsgröße so lange ermittelt werden, bis zumindest der erste Belastungswert kleiner als der erste Belastungsschwellwert ist.

Dadurch können bei Wiederinbetriebnahme des Fahrzeugs eine Belastungsermittlung und die Entscheidung über eine etwaige Vorreaktion oder Schutzreaktion anfänglich auf Grundlage des zuletzt gespeicherten ersten Belastungswerts durchgeführt werden.

Dadurch wird eine ungerechtfertigte Auslösung der Vorreaktion nach der Wiederinbetriebnahme des Fahrzeugs verhindert.

Es ist günstig, wenn zumindest der erste Belastungsgrenzwert abhängig von einer Fahrgeschwindigkeit des Fahrzeugs ist. Durch diese Maßnahme kann eine Belastungszunahme des Reibungsbremssystems mit zunehmender Bremsausgangsgeschwindigkeit des Fahrzeugs berücksichtigt werden. Eine Auslösung von Schutzreaktionen ist somit situationsspezifisch in Abhängigkeit der Fahrgeschwindigkeit bzw. der Bremsausgangsgeschwindigkeit möglich.

Eine Vorzugslösung wird erreicht, wenn Bremsungen des Fahrzeugs zumindest in Abhängigkeit von während der Bremsungen auftretenden Werten der zumindest ersten Belastungsgröße Belastungsgrößenklassen, welche aus Belastungsgrößenintervallen gebildet sind, zugeordnet werden. Die Bremsungen jeder Belastungsgrößenklasse können gezählt werden. Dadurch können Lastkollektive gebildet werden, die beispielsweise mittels Funkübertragung von dem Fahrzeug in einen Wartungsstand zur Auswertung übermittelt werden können. Eine Planung von Instandhaltungsmaßnahmen wird dadurch vereinfacht.

Hilfreich ist es, wenn zumindest der erste Belastungswert und die Schutzreaktion einem Triebfahrzeugführer ausgegeben werden.

Durch diese Maßnahme erhält der Triebfahrzeugführer einen genauen Einblick in einen aktuellen Status der Fahrzeugüberwachung. Eine Mensch-Maschine-Interaktion wird somit verbessert.

Um eine sichere Initialisierung der Fahrzeugüberwachung bei einer Wiederinbetriebnahme des Fahrzeugs nach einer Abstellphase zu erreichen und um eine Abkühlung des Reibungsbremssystems während der Abstellphase realistisch ermitteln zu können, ist es vorteilhaft, wenn der erste Belastungswert zusammen mit einem Zeitstempel in einer Weise gespeichert wird, dass der erste Belastungswert und der Zeitstempel nach einem Zeitraum, über welchen das Fahrzeug abgestellt ist, wieder aufrufbar sind.

Eine Überwachung eines Rads oder mehrerer Räder des Fahrzeugs, welche von besonderer Sicherheitsrelevanz ist, wird ermöglicht, wenn das erste Reibelement ein erstes Rad des Fahrzeugs ist.

Die Erfindung bezieht sich ferner auch auf eine Einrichtung zur Fahrzeugüberwachung, eingerichtet zur Durchführung des erfindungsgemäßen Verfahrens, bei der zumindest zwei voneinander unabhängige Überwachungsgeräte mit dem Fahrzeug verbindbar sind, wobei ein erstes Überwachungsgerät und ein zweites Überwachungsgerät als Steuergeräte ausgebildet sind. Dadurch werden eine Geräte-Redundanz und somit ein besonders hohes Sicherheitsniveau in der Fahrzeugüberwachung bewirkt. Ausfälle infolge gemeinsamer Ursache werden vermieden. Reaktionen des erfindungsgemäßen Verfahrens (z.B. die Schutzreaktion oder die Vorreaktion) können unabhängig voneinander von dem ersten Überwachungsgerät und von dem zweiten Überwachungsgerät vorbereitet werden.

Eine redundante Datenbasis zur Fahrzeugüberwachung wird erreicht, wenn das erste Überwachungsgerät mit einer ersten Erfassungseinrichtung für Bremsdrücke, Bremskräfte oder Bremsmomente eines Reibungsbremssystems des Fahrzeugs sowie mit einer zweiten Erfassungseinrichtung für kinematische Größen des Fahrzeugs verbindbar ist und das zweite Überwachungsgerät mit einer dritten Erfassungseinrichtung für Bremsdrücke, Bremskräfte oder Bremsmomente des Reibungsbremssystems des Fahrzeugs sowie mit einer vierten Erfassungseinrichtung für kinematische Größen des Fahrzeugs verbindbar ist, wobei die erste Erfassungseinrichtung unabhängig von der dritten Erfassungseinrichtung ist und die zweite Erfassungseinrichtung unabhängig von der vierten Erfassungseinrichtung ist.

Eine Umsetzung der Schutzreaktion ohne wesentlichen zeitlichen Verzug wird bewirkt, wenn das erste Überwachungsgerät und das zweite Überwachungsgerät mit einer Schnellbremsschleife des Fahrzeugs verbindbar sind.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen Verfahrens zur Fahrzeugüberwachung,
- Fig. 2:: Ein erstes Energiediagramm, in welches ein thermischer Energiezustand eines ersten Reibelements eines Schienenfahrzeugs, welcher als Schutzreaktion eine Schnellbremsung des Schienenfahrzeugs erfordert, sowie Energiegrenzwerte und Energiegrenzwertverläufe eingetragen sind,
- Fig. 3:: Ein zweites Energiediagramm, in welches ein thermischer Energiezustand eines ersten Reibelements eines Schienenfahrzeugs, welcher als Vorreaktion eine Geschwindigkeitsbegrenzung des Schienenfahrzeugs erfordert, ein thermischer Soll-Energiezustand des ersten Reibelements nach der Geschwindigkeitsbegrenzung sowie Energiegrenzwerte und Energiegrenzwertverläufe eingetragen sind, und
- Fig. 4:: Eine beispielhafte Ausführungsvariante einer erfindungsgemäßen Einrichtung zur Fahrzeugüberwachung in einem Schienenfahrzeug.

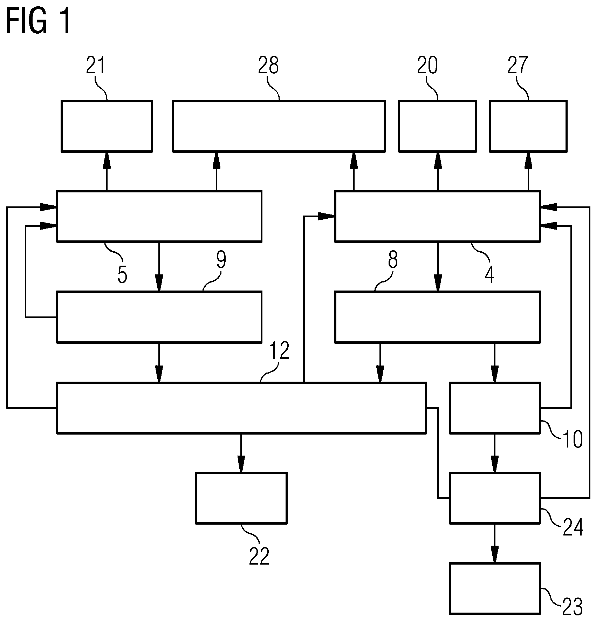

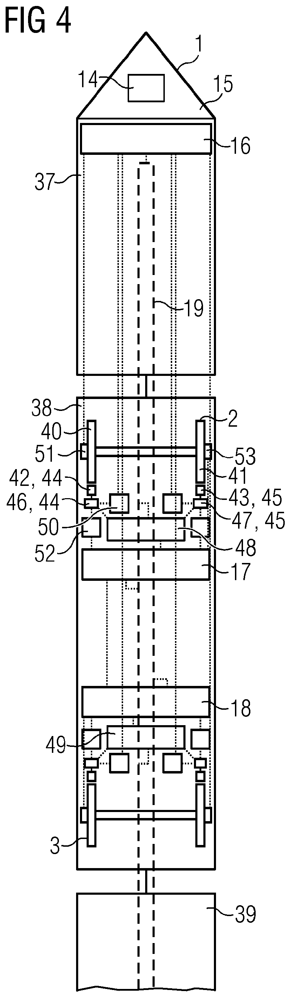

Fig. 1 zeigt eine beispielhafte Ausführungsvariante eines erfindungsgemäßen Verfahrens zur Fahrzeugüberwachung, welches in einem als Schienenfahrzeug 1 ausgebildeten spurgeführten Fahrzeug, wie es beispielhaft in Fig. 4 dargestellt ist, implementiert ist und durchgeführt wird.

Es werden Bremsdrücke eines Reibungsbremssystems des Schienenfahrzeugs 1, umfassend Klotzbremseinheiten mit Bremszylindern und Bremsklötzen sowie Räder, und kinematische Größen eines ersten Fahrwerks 2 des Schienenfahrzeugs 1 kontinuierlich erfasst. Die Räder sind erste Reibelemente, die Bremsklötze zweite Reibelemente des Reibungsbremssystems. Die ersten Reibelemente und die zweiten Reibelemente fungieren als Reibpartner, wobei die zweiten Reibelemente während eines Einsatzes des Reibungsbremssystems, d.h. während Bremsungen des Schienenfahrzeugs 1 gegen die ersten Reibelemente gedrückt werden. Als Bremsdrücke werden Zylinderdrücke der Bremszylinder, welche als Aktuatoren in Bezug auf die zweiten Reibelemente fungieren, erfasst.

Die erfassten kinematischen Größen umfassen Drehzahlen der Räder sowie Zeiten. Erfindungsgemäß ist es jedoch auch möglich, dass als kinematische Größen beispielsweise Fahrgeschwindigkeiten des Schienenfahrzeugs 1 erfasst werden.

Aus den Bremsdrücken, Bremsklotzflächen, Reibungskoeffizienten, Proportionalitätsfaktoren, den Drehzahlen, Radradien und den Zeiten werden laufend Reibleistungen und thermische Energien aufgrund von Reibung zwischen den ersten Reibelementen und den zweiten Reibelementen als Belastungsgrößen des Reibungsbremssystems ermittelt. Als erste Belastungsgröße fungiert dabei ein thermischer Energieinhalt. Als Werte der ersten Belastungsgröße werden mittels einer ersten Belastungsermittlung 4 Werte basierend auf thermischen Energieinhalten der ersten Reibelemente ermittelt.

Als zweite Belastungsgröße fungiert eine Reibleistung. Als Werte der zweiten Belastungsgröße werden mittels einer zweiten Belastungsermittlung 5 Reibleistungswerte der ersten Reibelemente ermittelt.

Die erste Belastungsgröße und die zweite Belastungsgröße sind also physikalische Größen unterschiedlicher Kategorien.

Erfindungsgemäß ist es auch denkbar, dass die Belastungsgrößen nicht auf Grundlage von Bremsdrücken, sondern auf Basis von Bremskräften oder Bremsmomenten ermittelt werden.

Die Proportionalitätsfaktoren umfassen Zylinder- und Gestängeübersetzungen, Wirkungsgrade etc. der Klotzbremseinheiten.

Zunächst werden aus den Bremsdrücken mit den Proportionalitätsfaktoren, den Bremsklotzflächen und den Reibungskoeffizienten, über bekannte Zusammenhänge zwischen Drücken und Kräften sowie zwischen Normal- und Tangentialkräften, Tangentialkräfte zwischen den ersten Reibelementen und den zweiten Reibelementen bestimmt. Dann werden aus den Drehzahlen mit den Radradien, über bekannte kinematische Zusammenhänge zwischen Drehzahlen bzw. Winkelgeschwindigkeiten und Umfangsgeschwindigkeiten, Radumfangsgeschwindigkeiten bestimmt.

Aus Multiplikation der Tangentialkräfte mit den Umfangsgeschwindigkeiten werden die Reibleistungswerte ermittelt.

Mittels Multiplikation der Reibleistungen mit den Zeiten werden Energieeinträge in die ersten Reibelemente ermittelt.

Die Werte der ersten Belastungsgröße, welche auf den thermischen Energieinhalten der ersten Reibelemente basieren, werden als Kumulation von Differenzen zwischen den Energieeinträgen in die ersten Reibelemente und von den ersten Reibelementen abgegebener Wärme mittels aus dem Stand der Technik bekannter Bildung von Wärmebilanzen ermittelt.

In den Wärmebilanzen werden die Energieeinträge durch Multiplikation der Reibleistungswerte mit den Zeiten ermittelt, die abgegebene Wärme aus Produkten aus Wärmeübergangszahlen, Oberflächen der ersten Reibelemente, Temperaturen der ersten Reibelemente und Zeiten. Die Temperaturen werden aus empirischen Abkühlfunktionen der ersten Reibelemente, welche aus Prüfstands- und/oder Feldversuchen vorab gebildet werden, bestimmt. Erfindungsgemäß ist es auch denkbar, die Temperaturen mittels aus dem Stand der Technik bekannter Temperatursimulationsmethoden zu bestimmen.

Erfindungsgemäß ist es weiterhin vorstellbar, zur ersten Belastungsermittlung 4 Differenzen aus den Reibleistungswerten und Produkten aus den Wärmeübergangszahlen, den Oberflächen der ersten Reibelemente und den Temperaturen der ersten Reibelemente zu bilden und die Differenzen mit den Zeiten zu multiplizieren.

Die Energieinhalte in den ersten Reibelementen steigen, wenn die Energieeinträge größer als die abgegebene Wärme sind. Die Energieinhalte sinken, wenn die von den ersten Reibelementen abgegebene Wärme größer als die Energieeinträge ist.

Wird beispielsweise keine Bremsung des Schienenfahrzeugs 1 durchgeführt, so erfolgen keine Energieeinträge in die ersten Reibelemente und die ersten Reibelemente geben Wärme ab, d.h. kühlen ab, wodurch die Energieinhalte der ersten Reibelemente sinken.

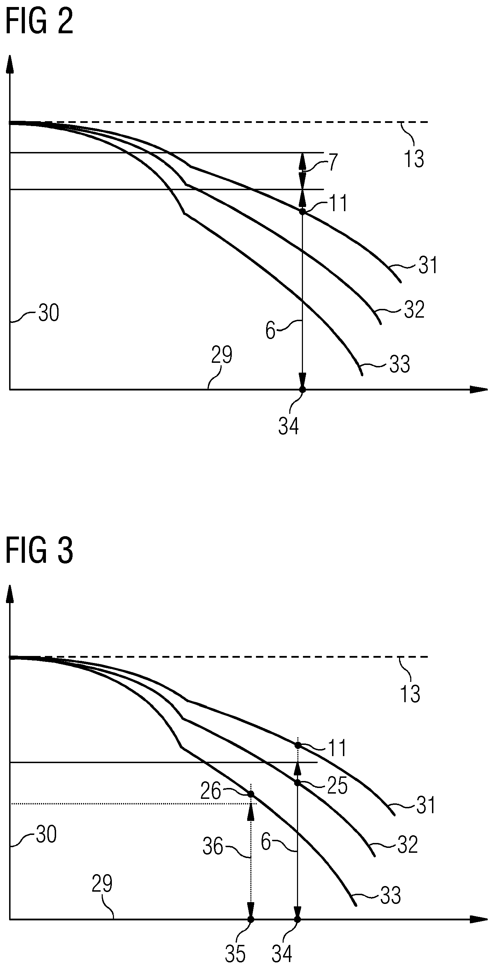

Mittels der ersten Belastungsermittlung 4 werden laufend Werte der ersten Belastungsgröße bestimmt. Ein erster Belastungswert 6 der ersten Belastungsgröße, wie er beispielhaft in Fig. 2 und Fig. 3 gezeigt ist, entspricht einem thermischen Energieinhalt des Reibungsbremssystems zum aktuellen Zeitpunkt.

Ein Belastungsvorhaltewert 7, wie er beispielhaft in Fig. 2 dargestellt ist, entspricht einer erwarteten Zunahme des Energieinhalts aufgrund eines Schnellbremsvorgangs des Schienenfahrzeugs, d.h. einer erwarteten thermischen Belastung des Reibungsbremssystems durch den Schnellbremsvorgang.

Der Belastungsvorhaltewert 7 wird nach oben beschriebenem Prinzip aus einer Reibleistung, welche mit einem definierten Schnellbremsdruck und einer definierten Bremsausgangsgeschwindigkeit bzw. Bremsausgangsdrehzahl ermittelt wird, und einer Wärmebilanzbildung, für welche eine Wärmeabgabe aus einem experimentell bestimmten Temperaturverlauf während einer Schnellbremsung aus der definierten Bremsausgangsgeschwindigkeit bestimmt wird, vorab gebildet und ist als Konstante gespeichert.

Erfindungsgemäß ist es jedoch auch denkbar, den Belastungsvorhaltewert 7 dynamisch, d.h. während eines Betriebseinsatzes des Schienenfahrzeugs 1 mittels laufend aktualisierter Parameter zu ermitteln und kontinuierlich anzupassen.

Als definierte Bremsausgangsgeschwindigkeit bzw. Bremsausgangsdrehzahl kann eine maximale Fahrgeschwindigkeit des Schienenfahrzeugs 1 bzw. eine maximale Drehzahl der Räder des Schienenfahrzeugs 1 eingesetzt sein.

Der Belastungsvorhaltewert 7 wird vorab in Abhängigkeit von Bremsparametern ermittelt, von welchen der Schnellbremsdruck abhängig ist. Als Bremsparameter werden dabei ein Bremsblending, eine Beladung des Schienenfahrzeugs und eine Streckenneigung berücksichtigt. Der Schnellbremsdruck ist umso höher, je größer ein Anteil des Reibungsbremssystems am Bremsblending ist. Wird die Schnellbremsung zusätzlich zu dem Reibungsbremssystem mit einem weiteren, davon unabhängigen Bremssystem (z.B. mit einer Wirbelstrombremse) durchgeführt, so wird ein geringerer Schnellbremsdruck angesetzt als bei einem ausschließlichen Einsatz des Reibungssystem.

Der anzusetzende Schnellbremsdruck wird auf Grundlage einer maximalen Beladung des Schienenfahrzeugs 1 und für eine Gefällefahrt des Schienenfahrzeugs 1 ermittelt.

Ergibt ein erster Grenzwertvergleich 8, dass der aktuelle erste Belastungswert 6 gleich groß ist wie oder größer ist als ein definierter erster Belastungsgrenzwert 11 der ersten Belastungsgröße, wie er beispielhaft in Fig. 2 gezeigt ist, so ist ein erstes Grenzwertvergleichskriterium erfüllt und es wird eine Schutzreaktion 12 gegen einen übermäßigen thermische Energieinhalt in dem Reibungsbremssystem ausgelöst.

Erfindungsgemäß ist es auch möglich, die Schutzreaktion 12 erst ab Überschreitung des ersten Belastungsgrenzwerts 11 durch den ersten Belastungswert 6 auszulösen. Erfindungsgemäß ist es weiterhin denkbar, die Schutzreaktion 12 erst dann auszulösen, wenn eine definierte Anzahl an Werten, d.h. eine Wertesequenz, der ersten Belastungsgröße gleich groß wie oder größer als der erste Belastungsgrenzwert 11 ist.

Der erste Belastungsgrenzwert 11 ist in einer Weise definiert, dass eine Summe aus dem aktuellen ersten Belastungswert 6 und dem Belastungsvorhaltewert 7 kleiner ist als oder höchstens gleich groß ist wie ein Maximalbelastungsgrenzwert 13 der ersten Belastungsgröße, wie er beispielhaft in Fig. 2 und Fig. 3 dargestellt ist, mit dem das Reibungsbremssystem höchstens belastet werden kann, ohne Schaden zu nehmen.

Mittels der zweiten Belastungsermittlung 5 ermittelte Reibleistungswerte werden laufend mit einem definierten zweiten Belastungsgrenzwert der zweiten Belastungsgröße verglichen (zweiter Grenzwertvergleich 9).

Als Schutzreaktion 12 gegen übermäßige Belastung des Reibungsbremssystems aufgrund von Reibleistungen wird eine Schnellbremsung des Schienenfahrzeugs 1 dann instruiert oder ausgelöst, wenn ein zweiter Belastungswert der zweiten Belastungsgröße gleich groß wie oder größer als der zweite Belastungsgrenzwert ist und somit ein zweites Grenzwertvergleichskriterium erfüllt ist. Erfindungsgemäß ist es jedoch auch vorstellbar, erst ab Überschreitung des zweiten Belastungsgrenzwerts durch den zweiten Belastungswert die Schnellbremsung zu instruieren oder auszulösen. Erfindungsgemäß ist es weiterhin denkbar, die Schutzreaktion 12 erst dann auszulösen, wenn eine definierte Anzahl an Reibleistungswerten, d.h. eine Wertesequenz, gleich groß wie oder größer als der zweite Belastungsgrenzwert ist.

Wie oben beschrieben, ist die Schutzreaktion 12 eine Instruktion oder Auslösung einer Schnellbremsung.

Um zu vermeiden, dass die Schutzreaktion 12 mehrfach parallel oder nacheinander ausgelöst wird, d.h. die Instruktion oder Auslösung der Schnellbremsung vorgenommen wird, wenn das Schienenfahrzeug 1 bereits eine Schnellbremsung durchführt, wird die Instruktion oder Auslösung der Schutzreaktion 12 verhindert, wenn bereits eine Schnellbremsanforderung aufgrund des ersten Grenzwertvergleichs 8 oder des zweiten Grenzwertvergleichs 9 aktiv ist.

Die Schnellbremsung wird bis in den Stillstand des Schienenfahrzeugs 1 durchgeführt. Erfindungsgemäß ist es jedoch auch möglich, die Schnellbremsung auf eine Zielfahrgeschwindigkeit des Schienenfahrzeugs 1 zu instruieren oder auszulösen und durchzuführen, wobei bei der Zielfahrgeschwindigkeit oder bei Fahrgeschwindigkeiten des Schienenfahrzeugs kleiner als die Zielfahrgeschwindigkeit selbst bei Maximalbremsdrücken des Reibungsbremssystems eine Zunahme der Werte der ersten Belastungsgröße ausgeschlossen ist, da bei derartigen Geschwindigkeiten in der Wärmebilanz die von dem Reibungsbremssystem abgegebene Wärme gleich groß wie oder größer als der Energieeintrag in das Reibungsbremssystem ist.

Die Schnellbremsung aufgrund des ersten Grenzwertvergleichs 8 oder des zweiten Grenzwertvergleichs 9 kann beispielsweise mittels einer in Fig. 4 gezeigten Anzeige 14 in einem ebenfalls in Fig. 4 dargestellten Führerraum 15 des Schienenfahrzeugs 1 einem Triebfahrzeugführer instruiert werden. Der Triebfahrzeugführer muss die Schnellbremsung daraufhin manuell einleiten. Reagiert der Triebfahrzeugführer nicht auf die Anzeige 14, so erfolgt eine automatische Auslösung der Schnellbremsung, wobei ein erstes Überwachungsgerät 16 des Schienenfahrzeugs 1, mittels welchem das erfindungsgemäße Verfahren durchgeführt wird, in eine Schnellbremsschleife 19 des Schienenfahrzeugs 1, wie sie beispielhaft in Fig. 4 gezeigt sind, eingreift. Erfindungsgemäß ist es auch denkbar, dass als Schutzreaktion 12 generell, d.h. ohne vorangehende Instruktion an den Triebfahrzeugführer, eine automatische Schnellbremsung des Schienenfahrzeugs 1, d.h. eine als Zwangsbremsung durchgeführte Schnellbremsung ausgelöst wird.

Auf der Anzeige 14 in dem Führerraum 15 werden dem Triebfahrzeugführer laufend der aktuelle erste Belastungswert 6 (erste Ausgabe 20) prozentuell in Bezug auf den ersten Belastungsgrenzwert 11 und der aktuelle zweite Belastungswert (zweite Ausgabe 21) prozentuell in Bezug auf den zweiten Belastungsgrenzwert sowie eine etwaige Schutzreaktion 12 (dritte Ausgabe 22) ausgegeben.

Erfindungsgemäß ist es auch denkbar, den ersten Belastungswert 6 und den zweiten Belastungswert als Absolutwerte auszugeben.

Um zu erreichen, dass die Schutzreaktion 12 nur bei schwerwiegenden Fehlern des Reibungsbremssystems ausgelöst wird, ist in dem erfindungsgemäßen Verfahren eine der Schutzreaktion 12 zeitlich vorgelagerte Vorreaktion 24 vorgesehen.

Die Vorreaktion 24 wird dann ausgelöst, wenn ein dritter Grenzwertvergleich 10, welcher nach dem ersten Grenzwertvergleich 8 durchgeführt wird, ergibt, dass der erste Belastungswert 6 gleich groß wie oder größer als ein erster Belastungsschwellwert 25, wie er beispielhaft in Fig. 3 dargestellt ist, jedoch kleiner als der erste Belastungsgrenzwert 11 ist.

Der erste Belastungsschwellwert 25 ist kleiner als der erste Belastungsgrenzwert 11.

Erfindungsgemäß ist es auch denkbar, die Vorreaktion 24 erst ab einer Überschreitung des ersten Belastungsschwellwerts 25 durch den ersten Belastungswert 6 auszulösen.

Erfindungsgemäß ist es weiterhin denkbar, die Vorreaktion 24 erst dann auszulösen, wenn eine definierte Anzahl an Werten, d.h. eine Wertesequenz, der ersten Belastungsgröße gleich groß wie oder größer als der erste Belastungsschwellwert 25 ist.

Die Vorreaktion 24 kann eine aktive Schutzreaktion 12 nicht unterbrechen, wohl aber kann eine ausgelöste Schutzreaktion 12 eine aktive Vorreaktion 24 ablösen. Aus diesem Grund sind die Schutzreaktion 12 und die Vorreaktion 24 miteinander logisch verknüpft.

Die Vorreaktion 24 ist eine Geschwindigkeitsbegrenzung des Schienenfahrzeugs 1. Die Geschwindigkeitsbegrenzung wird durch gezieltes Abschalten von Antrieben des Schienenfahrzeugs 1 und/oder durch eine Betriebsbremsung des Schienenfahrzeugs 1 erreicht.

Die Vorreaktion 24 bleibt so lange aktiv, bis der erste Belastungswert 6 gleich wie oder kleiner als ein zweiter Belastungsschwellwert 26 der ersten Belastungsgröße ist. Der zweite Belastungsschwellwert 26, wie er beispielhaft in Fig. 3 gezeigt ist, ist kleiner als der erste Belastungsschwellwert 25.

Die Vorreaktion 24 wird dem Triebfahrzeugführer auf der Anzeige 14 in dem Führerraum 15 ausgegeben (vierte Ausgabe 23). Dabei werden eine Soll-Fahrgeschwindigkeit als Ziel der Geschwindigkeitsbegrenzung, das Abschalten der Antriebe und die Betriebsbremsung angezeigt.

Der erste Belastungsgrenzwert 11, der erste Belastungsschwellwert 25 und der zweite Belastungsschwellwert 26 sind abhängig von der Fahrgeschwindigkeit des Schienenfahrzeugs 1 und sinken mit zunehmender Fahrgeschwindigkeit.

Der erste Belastungswert 6 wird im Gegensatz zu dem Belastungsvorhaltewert 7 kontinuierlich neu ermittelt. Bei Überprüfung von Voraussetzungen für die Schutzreaktion 12 und die Vorreaktion 24 wird von aktuellen Reibleistungswerten und aktuellen thermischen Energieinhaltswerten des Reibungsbremssystems ausgegangen.

Um eine sichere Initialisierung des Verfahrens bei einer Wiederinbetriebnahme des Schienenfahrzeugs 1 nach einer Abstellphase zu erreichen, wird der erste Belastungswert 6 zusammen mit einem Zeitstempel in einer Weise gespeichert, dass der erste Belastungswert 6 und der Zeitstempel nach einem Zeitraum, über welchen das Schienenfahrzeug 1 abgestellt ist, wieder aufrufbar sind (Speicherung 27). Nach der Wiederinbetriebnahme des Schienenfahrzeugs 1 wird mit dem wieder aufgerufenen ersten Belastungswert 6, dem wieder aufgerufenen Zeitstempel und einer Differenz aus einer aktuellen Zeit und dem Zeitstempel ein aktueller erster Belastungswert 6 ermittelt, in welchem eine Abkühlung des Reibungsbremssystems während der Abstellphase berücksichtigt ist. Die Abkühlung bzw. eine Wärmeabgabe des Reibungsbremssystems während der Abstellphase wird mit einem empirisch ermittelten Temperaturverlauf des Reibungsbremssystems bestimmt. Mit dem aktuellen ersten Belastungswert 6 wird nach der Wiederinbetriebnahme die kumulative erste Belastungsermittlung 4 gestartet.

Erfindungsgemäß ist es jedoch auch denkbar (beispielsweise dann, wenn kein Zeitstempel gespeichert werden kann), dass nach einem Abstellen des Schienenfahrzeugs 1 die thermischen Energieinhaltswerte so lange ermittelt werden, bis der erste Belastungswert 6 kleiner als der erste Belastungsschwellwert 25 ist. Das erste Überwachungsgerät 16 muss hierfür auch nach dem Abstellen des Schienenfahrzeugs 1, bis zum Abschluss der ersten Belastungsermittlung 4 mit Elektrizität versorgt sein. Dies kann beispielsweise mit einer Batterie des ersten Überwachungsgeräts 16 oder des Schienenfahrzeugs 1 erfolgen. Bei Wiederinbetriebnahme des Schienenfahrzeugs 1 werden die erste Belastungsermittlung 4 und der erste Grenzwertvergleich 8 anfänglich auf Grundlage des zuletzt gespeicherten ersten Belastungswerts 6 durchgeführt.

Dadurch wird einerseits eine Unterschätzung des thermischen Energieinhalts in dem Reibungsbremssystem vermieden, andererseits wird dadurch auch eine ungerechtfertigte Auslösung der Vorreaktion 24 nach der Wiederinbetriebnahme des Schienenfahrzeugs 1 verhindert.

Zur Erfassung und Bewertung von Lastkollektiven werden mittels des erfindungsgemäßen Verfahrens Bremsungen des Schienenfahrzeugs 1 in Abhängigkeit von Reibleistungswerten während der Bremsungen aus Reibleistungsintervallen gebildeten Reibleistungsklassen und in Abhängigkeit von thermischen Energieinhaltswerten während der Bremsungen aus thermischen Energieintervallen gebildeten thermischen Energieklassen zugeordnet (Klassifikation 28). Die Bremsungen jeder Reibleistungsklasse und jeder Energieklasse werden gezählt.

Ein derart gebildetes Lastkollektiv kann beispielsweise mittels Funkübertragung von dem Schienenfahrzeug 1 in einen Wartungsstand zur Auswertung übermittelt werden.

In Fig. 2 ist ein erstes Energiediagramm zu einem im Zusammenhang mit Fig. 1 beschriebenen Verfahren zur Fahrzeugüberwachung dargestellt, bei welchem auf einer Abszisse 29 eine Fahrgeschwindigkeit eines Schienenfahrzeugs 1, wie es beispielhaft in Fig. 4 gezeigt ist, und auf einer Ordinate 30 ein thermischer Energieinhalt eines ersten Reibelements eines Reibungsbremssystems des Schienenfahrzeugs 1 aufgetragen ist.

Das erste Energiediagramm umfasst weiterhin einen thermischen ersten Energiegrenzverlauf 31, einen thermischen zweiten Energiegrenzverlauf 32 sowie einen thermischen dritten Energiegrenzverlauf 33, welche sich auf eine im Zusammenhang mit Fig. 1 beispielhaft beschriebene erste Belastungsgröße des Reibungsbremssystems beziehen. Weiterhin ist ein konstanter thermischer Maximalbelastungsgrenzwert 13 der ersten Belastungsgröße des ersten Reibelements eingetragen, dessen Überschreitung Schäden an dem Reibungsbremssystem verursachen kann.

Ein thermischer erster Belastungswert 6 der ersten Belastungsgröße des ersten Reibelements, welcher mittels einer im Zusammenhang mit Fig. 1 beschriebenen ersten Belastungsermittlung 4 für einen aktuellen Fahrgeschwindigkeitswert 34 des Schienenfahrzeugs 1 bestimmt wird, überschreitet einen ersten Belastungsgrenzwert 11 des ersten Energiegrenzverlaufs 31. Daher wird, wie im Zusammenhang mit Fig. 1 beschrieben, eine Schutzreaktion 12 des Schienenfahrzeugs 1 ausgelöst.

Der erste Energiegrenzverlauf 31, der zweite Energiegrenzverlauf 32 und der dritte Energiegrenzverlauf 33 haben fallende Tendenzen mit steigender Fahrgeschwindigkeit. Der erste Belastungsgrenzwert 11 ist somit abhängig von der Fahrgeschwindigkeit und sinkt mit zunehmender Fahrgeschwindigkeit.

Der erste Energiegrenzverlauf 31 bzw. der erste Belastungsgrenzwert 11 sind in einer Weise definiert, dass eine Summe aus dem aktuellen ersten Belastungswert 6 und einem thermischen Belastungsvorhaltewert 7 der ersten Belastungsgröße, wie er im Zusammenhang mit Fig. 1 beispielhaft beschrieben ist, gleich groß wie oder kleiner als der Maximalbelastungsgrenzwert 13 ist.

Die Summe aus dem ersten Belastungswert 6 und dem Belastungsvorhaltewert 7 ist kleiner als der Maximalbelastungsgrenzwert 13.

Bei korrekter Umsetzung der Schutzreaktion 12 wird demnach eine thermische Überlastung bzw. Überbeanspruchung des ersten Reibelements verhindert.

Fig. 3 zeigt ein zweites Energiediagramm zu einem im Zusammenhang mit Fig. 1 beschriebenen Verfahren zur Fahrzeugüberwachung. Eine Abszisse 29, eine Ordinate 30, ein erster Energiegrenzverlauf 31, ein zweiter Energiegrenzverlauf 32 und ein dritter Energiegrenzverlauf 33 sowie ein Maximalbelastungsgrenzwert 13 sind wie in jenem ersten Energiediagramm, das in Fig. 2 gezeigt ist, ausgeführt.

Der erste Energiegrenzverlauf 31, der zweite Energiegrenzverlauf 32, der dritte Energiegrenzverlauf 33 und der Maximalbelastungsgrenzwert 13 beziehen sich auf eine erste Belastungsgröße, wie sie im Zusammenhang mit Fig. 1 beispielhaft beschrieben ist.

Ein aktueller erster Belastungswert 6 der ersten Belastungsgröße bei einem aktuellen Fahrgeschwindigkeitswert 34 eines Schienenfahrzeugs 1, wie es beispielhaft in Fig. 4 dargestellt ist, unterschreitet einen ersten Belastungsgrenzwert 11 auf dem ersten Energiegrenzverlauf 31 und überschreitet einen ersten Belastungsschwellwert 25 auf dem zweiten Energiegrenzverlauf 32, welcher kleiner als der erste Belastungsgrenzwert 11 ist. Daher wird nicht eine im Zusammenhang mit Fig. 1 beschriebene Schutzreaktion 12, sondern eine ebenfalls im Zusammenhang mit Fig. 1 beschriebene Vorreaktion 24 ausgelöst, bei welcher eine Fahrgeschwindigkeit des Schienenfahrzeugs 1 begrenzt wird.

Die Vorreaktion 24 wird mittels Antriebsabschaltung und/oder betrieblicher Bremsung des Schienenfahrzeugs 1 durchgeführt. Es wird dadurch ein Soll-Fahrgeschwindigkeitswert 35 erreicht, bei welchem ein thermischer Soll-Belastungswert 36 der ersten Belastungsgröße des ersten Reibelements kleiner als ein thermischer zweiter Belastungsschwellwert 26 auf dem dritten Energiegrenzverlauf 33 ist. Erfindungsgemäß ist es auch möglich, dass der Soll-Belastungswert 36 gleich groß wie der zweite Belastungsschwellwert 26 ist.

Der zweite Belastungsschwellwert 26 ist kleiner als der erste Belastungsschwellwert 25.

Fig. 4 offenbart ein als Schienenfahrzeug 1 ausgeführtes spurgeführtes Fahrzeug mit einer beispielhaften Ausführungsvariante einer erfindungsgemäßen Einrichtung zur Fahrzeugüberwachung. Mittels der Einrichtung wird ein erfindungsgemäßes Verfahren zur Fahrzeugüberwachung durchgeführt, wie es im Zusammenhang mit Fig. 1 beschrieben ist.

Das Schienenfahrzeug 1 umfasst einen ersten Wagen 37, einen zweiten Wagen 38, einen dritten Wagen 39 sowie weitere, in Fig. 4 nicht gezeigte Wagen.

Mit dem ersten Wagen 37 ist ein Fahrzeugsteuergerät verbunden, welches als erstes Überwachungsgerät 16 der erfindungsgemäßen Einrichtung zur Fahrzeugüberwachung fungiert. Das erste Überwachungsgerät 16 ist mit einer durchgängigen Schnellbremsschleife 19 des Schienenfahrzeugs 1 verbunden.

Der zweite Wagen 38 weist ein erstes Fahrwerk 2 und ein zweites Fahrwerk 3 auf. Der erste Wagen 37, der dritte Wagen 39 und die weiteren Wagen umfassen weitere, in Fig. 4 nicht dargestellte Fahrwerke.

Das erste Fahrwerk 2 umfasst ein erstes Rad 40 und ein zweites Rad 41. Mit dem ersten Rad 40 kann ein erster Bremsklotz 42 einer ersten Klotzbremseinheit 44 in Kontakt gebracht werden, mit dem zweiten Rad 41 ein zweiter Bremsklotz 43 einer zweiten Klotzbremseinheit 45.

Die erste Klotzbremseinheit 44 umfasst neben dem ersten Bremsklotz 42 auch einen pneumatischen ersten Bremszylinder 46, die zweite Klotzbremseinheit 45 neben dem zweiten Bremsklotz 43 auch einen pneumatischen zweiten Bremszylinder 47. Mittels des ersten Bremszylinders 46 wird der erste Bremsklotz 42 betätigt, mittels des zweiten Bremszylinders 47 der zweite Bremsklotz 43.

Der erste Bremszylinder 46 und der zweite Bremszylinder 47 werden von einem ersten Bremssteuergerät, welches als zweites Überwachungsgerät 17 der erfindungsgemäßen Einrichtung zur Fahrzeugüberwachung fungiert, angesteuert. Elektrische Steuersignale aus dem ersten Bremssteuergerät bzw. dem zweiten Überwachungsgerät 17 werden in einer ersten Elektropneumatikeinrichtung 48 mit Analogwandlern, Ventilen, Druckluftbehältern usw. in Druckluftsignale gewandelt, welche in den ersten Bremszylinder 46 und den zweiten Bremszylinder 47 übertragen werden. Das erste Bremssteuergerät bzw. das zweite Überwachungsgerät 17 ist über Steuerleitungen und die erste Elektropneumatikeinrichung 48 mit der ersten Klotzbremseinheit 44 und der zweiten Klotzbremseinheit 45 verbunden.

Das erste Bremssteuergerät bzw. das zweite Überwachungsgerät 17 sowie die erste Elektropneumatikeinrichtung 48 sind mit der Schnellbremsschleife 19 verbunden. Die erste Klotzbremseinheit 44 und die zweite Klotzbremseinheit 45 sind daher über die erste Elektropneumatikeinrichtung 48 mit der Schnellbremsschleife 19 verbunden.

Das erste Rad 40 fungiert als erstes Reibelement eines Reibungsbremssystems des Schienenfahrzeugs 1, der erste Bremsklotz 42 als zweites Reibelement des Reibungsbremssystems.

Das zweite Rad 41 fungiert als drittes Reibelement des Reibungsbremssystems, der zweite Bremsklotz 43 als viertes Reibelement des Reibungsbremssystems.

Das zweite Fahrwerk 3 ist konstruktiv sowie funktionell gleich ausgeführt wie das erste Fahrwerk und umfasst ebenfalls Klotzbremseinheiten mit Bremsklötzen, welche mit Rädern in Kontakt gebracht werden können.

Die Klotzbremseinheiten des zweiten Fahrwerks 3 werden durch ein zweites Bremssteuergerät, welches als drittes Überwachungsgerät 18 der erfindungsgemäßen Einrichtung zur Fahrzeugüberwachung fungiert, über eine zweite Elektropneumatikeinrichtung 49 angesteuert. Die Klotzbremseinheiten des zweiten Fahrwerks 3 sind über die zweite Elektropneumatikeinrichtung 49 und Steuerleitungen mit dem zweiten Bremssteuergerät bzw. mit dem dritten Überwachungsgerät 18 verbunden.

Das zweite Bremssteuergerät bzw. die dritte Überwachungseinrichtung 18 und die zweite Elektropneumatikeinrichtung 49 sind über Steuerleitungen mit der Schnellbremsschleife 19 verbunden. Die Klotzbremseinheiten des zweiten Fahrwerks 3 sind daher über die zweite Elektropneumatikeinrichtung 49 mit der Schnellbremsschleife 19 verbunden.

Die Fahrwerke des ersten Wagens 37 und des dritten Wagens 39 umfassen weitere, in Fig. 4 nicht gezeigte Bremseinheiten bzw. Reibelemente, welche ebenfalls Teile des Reibungsbremssystems sind und welche mit weiteren, in Fig. 4 ebenfalls nicht dargestellten Bremssteuergeräten bzw. Überwachungsgeräten und der Schnellbremsschleife 19 verbunden sind.

Mittels der erfindungsgemäßen Einrichtung zur Fahrzeugüberwachung werden die erste Klotzbremseinheit 44, die zweite Klotzbremseinheit 45 sowie sämtliche weitere Klotzbremseinheiten und Bremseinheiten des Reibungsbremssystems überwacht.

Die erfindungsgemäße Einrichtung zur Fahrzeugüberwachung umfasst, wie oben beschrieben, das erste Überwachungsgerät 16, das zweite Überwachungsgerät 17, das dritte Überwachungsgerät 18 sowie weitere Überwachungsgeräte, welche als voneinander unabhängige Steuergeräte ausgebildet sind.

Das erste Überwachungsgerät 16 ist mit einer ersten Erfassungseinrichtung 50 für Bremsdrücke des Reibungsbremssystems, welche als mit dem ersten Bremszylinder 46 gekoppeltes erstes Druckmessgerät ausgeführt ist, sowie mit einer zweiten Erfassungseinrichtung 51 für kinematische Größen des ersten Fahrwerks 2, welche als mit dem ersten Rad 40 gekoppelter erster Drehzahlmesser ausgebildet ist, verbunden.

Das zweite Überwachungsgerät 17 ist mit einer dritten Erfassungseinrichtung 52 für Bremsdrücke des Reibungsbremssystems, welche als mit dem ersten Bremszylinder 46 gekoppeltes zweites Druckmessgerät ausgeführt ist, sowie mit einer vierten Erfassungseinrichtung 53 für kinematische Größen des ersten Fahrwerks 2, welche als mit dem zweiten Rad 41 gekoppelter zweiter Drehzahlmesser ausgebildet ist, verbunden.

Erfindungsgemäß ist es auch vorstellbar, dass, wenn nicht Bremsdrücke, sondern Bremskräfte oder Bremsmomente erfasst werden sollen, die erste Erfassungseinrichtung 50 und die dritte Erfassungseinrichtung 52 als Kraftmessdosen oder Drehmomentsensoren etc. auszuführen.

Die erste Erfassungseinrichtung 50 ist unabhängig von der dritten Erfassungseinrichtung 52 und die zweite Erfassungseinrichtung 51 ist unabhängig von der vierten Erfassungseinrichtung 53.

Mittels von der ersten Erfassungseinrichtung 50, der zweiten Überwachungseinrichtung 51, der dritten Überwachungseinrichtung 52 und der vierten Überwachungseinrichtung 53 erfasster Messignale werden, wie im Zusammenhang mit Fig. 1 beschrieben, eine erste Belastungsermittlung 4 und eine zweite Belastungsermittlung 5 in Bezug auf das erste Rad 40 bzw. das erste Reibelement durchgeführt. Die erste Belastungsermittlung 4 und die zweite Belastungsermittlung 5 werden von dem ersten Überwachungsgerät 16 und dem zweiten Überwachungsgerät 17 redundant durchgeführt.

Über weitere, in Fig. 4 teilweise gezeigte Erfassungseinrichtungen, welche mit dem ersten Überwachungsgerät 16, dem zweiten Überwachungsgerät 17, dem dritten Überwachungsgerät 18 und/oder den weiteren Überwachungsgeräten verbunden sind, werden die erste Belastungsermittlung 4 und die zweite Belastungsermittlung 5 auch für das zweite Rad 41 des ersten Fahrwerks 2 sowie Räder des zweiten Fahrwerks 3 und des ersten Wagens 37, des dritten Wagens 39 sowie der weiteren Wagen des Schienenfahrzeugs 1 durchgeführt.

Das zweite Überwachungsgerät 17 ist über eine Signalleitung mit dem dritten Überwachungsgerät 18 verbunden, wodurch das zweite Überwachungsgerät 17 auch die Klotzbremseinheiten bzw. die Räder des zweiten Fahrwerks 3 überwacht und das dritte Überwachungsgerät 18 auch die erste Klotzbremseinheit 44 bzw. das erste Rad 40 und die zweite Klotzbremseinheit 45 bzw. das zweite Rad 41 des ersten Fahrwerks 2 überwacht.

Wie im Zusammenhang mit Fig. 1 beschrieben, kann als Folge der ersten Belastungsermittlung 4 oder der zweiten Belastungsermittlung 5 eine Schutzreaktion 12 oder als Folge der ersten Belastungsermittlung 4 eine Vorreaktion 24 ausgelöst werden. Zur Durchführung erforderlicher Verfahrensschritte sind in dem ersten Überwachungsgerät 16, in dem zweiten Überwachungsgerät 17 und in dem dritten Überwachungsgerät 18 Zeitmessgeräte sowie Computerprogramme (z.B. mit parametrierten Abkühlfunktionen, Temperatursimulationsmethoden etc.) implementiert.

Bei der Schutzreaktion 12 wird eine Schnellbremsung des Schienenfahrzeugs 1 instruiert oder ausgelöst. Bei einer automatischen Auslösung der Schnellbremsung greift beispielsweise das erste Überwachungsgerät 16 oder das zweite Überwachungsgerät 17 in die Schnellbremsschleife 19 ein. Eine elektrische Spannungsunterbrechung der Schnellbremsschleife 19 veranlasst über die erste Elektropneumatikeinrichtung 48, die zweite Elektropneumatikeinrichtung 49 sowie die weiteren Elektropneumatikeinrichtungen des Schienenfahrzeugs 1 die erste Klotzbremseinheit 44, die zweite Klotzbremseinheit 45 sowie die weiteren Klotzbremseinheiten und die weiteren Bremseinheiten des Reibungsbremssystems zum Aufbau eines Schnellbremsdrucks, wodurch Bremskräfte (zwischen dem ersten Reibelement und dem zweiten Reibelement sowie zwischen weiteren Reibelementen des Reibungsbremssystems) erzeugt und das Schienenfahrzeug 1 gebremst wird.

Bei der Vorreaktion 24 wird eine Geschwindigkeitsbegrenzung des Schienenfahrzeugs 1 veranlasst. Dabei werden beispielsweise über das erste Überwachungsgerät 16 in Fig. 4 nicht gezeigte Antriebe des Schienenfahrzeugs 1 abgeschaltet und/oder Betriebsbremsungen des Schienenfahrzeugs 1 über eine elektrodynamische Bremswirkung der Antriebe ausgelöst.

Ergebnisse der ersten Belastungsermittlung 4, der zweiten Belastungsermittlung 5 sowie Instruktionen und/oder Statusanzeigen bezüglich der Schutzreaktion 12 oder der Vorreaktion 24 werden einem Triebfahrzeugführer über eine Anzeige 14 in einem Führerraum 15 des Schienenfahrzeugs 1 ausgegeben.

### Liste der Bezeichnungen

- 1: Schienenfahrzeug
- 2: Erstes Fahrwerk
- 3: Zweites Fahrwerk
- 4: Erste Belastungsermittlung
- 5: Zweite Belastungsermittlung
- 6: Erster Belastungswert
- 7: Belastungsvorhaltewert
- 8: Erster Grenzwertvergleich
- 9: Zweiter Grenzwertvergleich
- 10: Dritter Grenzwertvergleich
- 11: Erster Belastungsgrenzwert
- 12: Schutzreaktion
- 13: Maximalbelastungsgrenzwert
- 14: Anzeige
- 15: Führerraum
- 16: Erstes Überwachungsgerät
- 17: Zweites Überwachungsgerät
- 18: Drittes Überwachungsgerät
- 19: Schnellbremsschleife
- 20: Erste Ausgabe
- 21: Zweite Ausgabe
- 22: Dritte Ausgabe
- 23: Vierte Ausgabe
- 24: Vorreaktion
- 25: Erster Belastungsschwellwert
- 26: Zweiter Belastungsschwellwert
- 27: Speicherung
- 28: Klassifikation
- 29: Abszisse
- 30: Ordinate
- 31: Erster Energiegrenzverlauf
- 32: Zweiter Energiegrenzverlauf
- 33: Dritter Energiegrenzverlauf
- 34: Fahrgeschwindigkeitswert
- 35: Soll-Fahrgeschwindigkeitswert
- 36: Soll-Belastungswert
- 37: Erster Wagen
- 38: Zweiter Wagen
- 39: Dritter Wagen
- 40: Erstes Rad
- 41: Zweites Rad
- 42: Erster Bremsklotz
- 43: Zweiter Bremsklotz
- 44: Erste Klotzbremseinheit
- 45: Zweite Klotzbremseinheit
- 46: Erster Bremszylinder
- 47: Zweiter Bremszylinder
- 48: Erste Elektropneumatikeinrichtung
- 49: Zweite Elektropneumatikeinrichtung
- 50: Erste Erfassungseinrichtung
- 51: Zweite Erfassungseinrichtung
- 52: Dritte Erfassungseinrichtung
- 53: Vierte Erfassungseinrichtung

## Patentansprüche

1. Verfahren zur Fahrzeugüberwachung, wobei Bremsdrücke, Bremskräfte oder Bremsmomente eines Reibungsbremssystems, umfassend zumindest ein erstes Reibelement und ein zweites Reibelement, eines spurgeführten Fahrzeugs, insbesondere eines Schienenfahrzeugs (1), und kinematische Größen des Fahrzeugs erfasst werden und wobei aus den Bremsdrücken, Bremskräften oder Bremsmomenten und aus den kinematischen Größen Werte zumindest einer ersten Belastungsgröße des Reibungsbremssystems ermittelt werden, wobei mit den Werten der zumindest ersten Belastungsgröße Grenzwertvergleiche durchgeführt werden, wobei als Schutzreaktion (12) eine ein vereinbartes Sicherheitsniveau gewährleistende Bremsung des Fahrzeugs dann instruiert oder ausgelöst wird, wenn zumindest ein Grenzwertvergleichskriterium erfüllt ist, **dadurch gekennzeichnet, dass** als Werte der zumindest ersten Belastungsgröße Werte basierend auf thermischen Energieinhalten des Reibungsbremssystems ermittelt werden, wobei die Werte der zumindest ersten Belastungsgröße als Kumulation von Differenzen zwischen Energieeinträgen in das erste Reibelement und von dem ersten Reibelement abgegebener Wärme ermittelt werden.

2. Verfahren nach Anspruch 1, **dadurch gekennzeichnet, dass** die Bremsung auf eine Zielfahrgeschwindigkeit des Fahrzeugs oder in den Stillstand des Fahrzeugs instruiert oder ausgelöst wird und durchgeführt wird, wobei bei der Zielfahrgeschwindigkeit oder bei Fahrgeschwindigkeiten des Fahrzeugs kleiner als die Zielfahrgeschwindigkeit selbst bei Maximalbremsdrücken, Maximalbremskräften oder Maximalbremsmomenten des Reibungsbremssystems in Ermittlung der Werte der zumindest ersten Belastungsgröße eine Zunahme der Werte der zumindest ersten Belastungsgröße ausgeschlossen ist.

3. Verfahren nach Anspruch 1 oder 2, **dadurch gekennzeichnet, dass** ein erstes Grenzwertvergleichskriterium dann erfüllt ist, wenn zumindest ein erster Belastungswert (6) der zumindest ersten Belastungsgröße gleich groß wie oder größer als ein erster Belastungsgrenzwert (11) ist.

4. Verfahren nach Anspruch 3, **dadurch gekennzeichnet, dass** aus den Bremsdrücken, Bremskräften oder Bremsmomenten und aus den kinematischen Größen Werte einer zweiten Belastungsgröße des Reibungsbremssystems ermittelt werden, wobei die erste Belastungsgröße und die zweite Belastungsgröße physikalische Größen unterschiedlicher Kategorien sind, wobei mit den Werten der zweiten Belastungsgröße Grenzwertvergleiche durchgeführt werden, wobei ein zweites Grenzwertvergleichskriterium dann erfüllt ist, wenn zumindest ein zweiter Belastungswert der zweiten Belastungsgröße gleich groß wie oder größer als ein zweiter Belastungsgrenzwert ist.

5. Verfahren nach Anspruch 4, **dadurch gekennzeichnet, dass** als Werte der zweiten Belastungsgröße Reibleistungswerte des Reibungsbremssystems ermittelt werden.

6. Verfahren nach einem der Ansprüche 3 bis 5, **dadurch gekennzeichnet, dass** der erste Belastungsgrenzwert (11) in einer Weise definiert ist, dass eine Summe aus dem aktuellen ersten Belastungswert (6) und einem Belastungsvorhaltewert (7) der zumindest ersten Belastungsgröße, welcher einer erwarteten Belastung des Reibungsbremssystems durch die Bremsung entspricht, gleich groß wie oder kleiner als ein Maximalbelastungsgrenzwert (13) der zumindest ersten Belastungsgröße ist.

7. Verfahren nach Anspruch 6, **dadurch gekennzeichnet, dass** der Belastungsvorhaltewert (7) abhängig von zumindest einem Bremsparameter, insbesondere abhängig von einem Bremsblending, einer Beladung des Fahrzeugs oder/und einer Streckenneigung ist.

8. Verfahren nach einem der Ansprüche 3 bis 7, **dadurch gekennzeichnet, dass** als Vorreaktion (24) eine Geschwindigkeitsbegrenzung des Fahrzeugs dann instruiert oder ausgelöst wird, wenn zumindest der erste Belastungswert (6) gleich groß wie oder größer als ein erster Belastungsschwellwert (25) der zumindest ersten Belastungsgröße ist, wobei der erste Belastungsschwellwert (25) kleiner als der der erste Belastungsgrenzwert (11) ist.

9. Verfahren nach Anspruch 8, **dadurch gekennzeichnet, dass** nach einem Abstellen des Fahrzeugs Werte der zumindest ersten Belastungsgröße so lange ermittelt werden, bis zumindest der erste Belastungswert (6) kleiner als der erste Belastungsschwellwert (25) ist.

10. Verfahren nach einem der Ansprüche 3 bis 9, **dadurch gekennzeichnet, dass** zumindest der erste Belastungsgrenzwert (11) abhängig von einer Fahrgeschwindigkeit des Fahrzeugs ist.

11. Verfahren nach einem der Ansprüche 1 bis 10, **dadurch gekennzeichnet, dass** Bremsungen des Fahrzeugs zumindest in Abhängigkeit von während der Bremsungen auftretenden Werten der zumindest ersten Belastungsgröße Belastungsgrößenklassen, welche aus Belastungsgrößenintervallen gebildet sind, zugeordnet werden.

12. Verfahren nach einem der Ansprüche 3 bis 11, **dadurch gekennzeichnet, dass** zumindest der erste Belastungswert (6) und die Schutzreaktion (12) einem Triebfahrzeugführer ausgegeben werden.

13. Verfahren nach einem der Ansprüche 3 bis 12, **dadurch gekennzeichnet, dass** der erste Belastungswert (6) zusammen mit einem Zeitstempel in einer Weise gespeichert wird, dass der erste Belastungswert (6) und der Zeitstempel nach einem Zeitraum, über welchen das Fahrzeug abgestellt ist, wieder aufrufbar sind.

14. Verfahren nach einem der Ansprüche 1 bis 13, **dadurch gekennzeichnet, dass** das erste Reibelement ein erstes Rad (40) des Fahrzeugs ist.

15. Einrichtung zur Fahrzeugüberwachung, eingerichtet zur Durchführung des Verfahrens nach einem der Ansprüche 1 bis 14, **dadurch gekennzeichnet, dass** zumindest zwei voneinander unabhängige Überwachungsgeräte mit dem Fahrzeug verbindbar sind, wobei ein erstes Überwachungsgerät (16) und ein zweites Überwachungsgerät (17) als Steuergeräte ausgebildet sind.

16. Einrichtung nach Anspruch 15, **dadurch gekennzeichnet, dass** das erste Überwachungsgerät (16) mit einer ersten Erfassungseinrichtung (50) für Bremsdrücke, Bremskräfte oder Bremsmomente eines Reibungsbremssystems des Fahrzeugs sowie mit einer zweiten Erfassungseinrichtung (51) für kinematische Größen des Fahrzeugs verbindbar ist und das zweite Überwachungsgerät (17) mit einer dritten Erfassungseinrichtung (52) für Bremsdrücke, Bremskräfte oder Bremsmomente des Reibungsbremssystems des Fahrzeugs sowie mit einer vierten Erfassungseinrichtung (53) für kinematische Größen des Fahrzeugs verbindbar ist, wobei die erste Erfassungseinrichtung (50) redundant zu und somit unabhängig von der dritten Erfassungseinrichtung (52) ist und die zweite Erfassungseinrichtung (51) redundant zu und somit unabhängig von der vierten Erfassungseinrichtung (53) ist.

17. Einrichtung nach Anspruch 15 oder 16, **dadurch gekennzeichnet, dass** das erste Überwachungsgerät (16) und das zweite Überwachungsgerät (17) mit zumindest einer Bremseinheit, insbesondere mit zumindest einer ersten Klotzbremseinheit (44) des Fahrzeugs verbindbar sind.

18. Einrichtung nach einem der Ansprüche 15 bis 17, **dadurch gekennzeichnet, dass** das erste Überwachungsgerät (16) und das zweite Überwachungsgerät (17) mit einer Schnellbremsschleife (19) des Fahrzeugs verbindbar sind.

## Claims

1. Method for vehicle monitoring, wherein brake pressures, brake forces or braking torques of a friction braking system, comprising at least a first friction element and a second friction element, of a rail-guided vehicle, in particular of a rail vehicle (1), and kinematic parameters of the vehicle are captured, and wherein values of at least one first load parameter of the friction braking system are determined from the brake pressures, brake forces or braking torques and from the kinematic parameters, wherein limit value comparisons are carried out with the values of the at least first load parameter, wherein as a protective reaction (12) a braking of the vehicle which ensures an agreed safety level is then instructed or triggered if at least one limit value comparison criterion is fulfilled, **characterised in that** values based on thermal energy contents of the friction braking system are determined as values of the at least first load parameter, wherein the values of the at least first load parameter are determined as a cumulation of differences between energy inputs into the first friction element and heat output by the first friction element.

2. Method according to claim 1, **characterised in that** the braking to a target driving speed of the vehicle or into the stoppage of the vehicle is instructed or triggered and carried out, wherein at the target driving speed or at driving speeds of the vehicle lower than the target driving speed, even at maximum brake pressures, maximum brake forces or maximum braking torques of the friction braking system, an increase in the values of the at least first load parameter is ruled out in the determination of the values of the at least first load parameter.

3. Method according to claim 1 or 2, **characterised in that** a first limit value comparison criterion is then fulfilled if at least a first load value (6) of the at least first load parameter is equal to or greater than a first load limit value (11).

4. Method according to claim 3, **characterised in that** values of a second load parameter of the friction braking system are determined from the brake pressures, brake forces or braking torques and from the kinematic parameters, wherein the first load parameter and the second load parameter are physical parameters of different categories, wherein limit value comparisons are carried out with the values of the second load parameter, wherein a second limit value comparison criterion is then fulfilled if at least a second load value of the second load parameter is equal to or greater than a second load limit value.

5. Method according to claim 4, **characterised in that** frictional power values of the friction braking system are determined as values of the second load parameter.

6. Method according to one of claims 3 to 5, **characterised in that** the first load limit value (11) is defined in such a way that a total of the current first load value (6) and a load lead value (7) of the at least first load parameter, which corresponds to an expected load of the friction braking system by means of the braking, is equal to or smaller than a maximum load limit value (13) of the at least first load parameter.

7. Method according to claim 6, **characterised in that** the load lead value (7) is dependent on at least one braking parameter, in particular as a function of a brake blending, a loading of the vehicle and/or a track gradient.

8. Method according to one of claims 3 to 7, **characterised in that** as a preliminary reaction (24), a speed limitation of the vehicle is then instructed or triggered if at least the first load value (6) is equal to or greater than a first load threshold value (25) of the at least first load parameter, wherein the first load threshold value (25) is smaller than that of the first load limit value (11).

9. Method according to claim 8, **characterised in that** after parking the vehicle, values of the at least first load parameter are determined until at least the first load value (6) is smaller than the first load threshold value (25).

10. Method according to one of claims 3 to 9, **characterised in that** at least the first load limit value (11) is dependent on a driving speed of the vehicle.

11. Method according to one of claims 1 to 10, **characterised in that** brake activations of the vehicle are assigned to load parameter categories at least as a function of values of the at least first load parameter occurring during the brake activations, which load parameter categories are formed from load parameter intervals.

12. Method according to one of claims 3 to 11, **characterised in that** at least the first load value (6) and the protective reaction (12) are output to a train driver.

13. Method according to one of claims 3 to 12, **characterised in that** the first load value (6) is stored together with a time stamp in such a way that the first load value (6) and the time stamp can be retrieved again after a period of time during which the vehicle is parked.

14. Method according to one of claims 1 to 13, **characterised in that** the first friction element is a first wheel (40) of the vehicle.

15. Facility for vehicle monitoring, configured to carry out the method according to one of claims 1 to 14, **characterised in that** at least two monitoring devices which are independent of one another can be connected to the vehicle, wherein a first monitoring device (16) and a second monitoring device (17) are embodied as control devices.

16. Facility according to claim 15, **characterised in that** the first monitoring device (16) can be connected to a first capture facility (50) for brake pressures, brake forces or braking torques of a friction braking system of the vehicle and to a second capture facility (51) for kinematic parameters of the vehicle, and the second monitoring device (17) can be connected to a third capture facility (52) for brake pressures, brake forces or braking torques of the friction braking system of the vehicle and to a fourth capture facility (53) for kinematic parameters of the vehicle, wherein the first capture facility (50) is redundant to and thus independent of the third capture facility (52) and the second capture facility (51) is redundant to and thus independent of the fourth capture facility (53).

17. Facility according to claim 15 or 16, **characterised in that** the first monitoring device (16) and the second monitoring device (17) can be connected to at least one brake unit, in particular to at least a first tread brake unit (44) of the vehicle.

18. Facility according to one of claims 15 to 17, **characterised in that** the first monitoring device (16) and the second monitoring device (17) can be connected to an emergency brake loop (19) of the vehicle.

## Revendications

1. Procédé de surveillance de véhicule, dans lequel des pressions de freinage, des forces de freinage ou des couples de freinage d'un système de freinage à friction, comprenant au moins un premier élément de friction et un deuxième élément de friction, d'un véhicule guidé sur piste, plus particulièrement d'un véhicule ferroviaire (1), et des grandeurs cinématiques du véhicule sont saisies et dans lequel à partir des pressions de freinage, des forces de freinage ou des couples de freinage et à partir des grandeurs cinématiques, des valeurs d'au moins une première grandeur de charge du système de freinage à friction sont déterminées, dans lequel avec les valeurs de la au moins première grandeur de charge, des comparaisons des valeurs limites sont effectuées, dans lequel comme réaction de protection (12) un freinage du véhicule garantissant un niveau de sécurité convenu est alors commandé ou déclenché lorsqu'au moins un critère de comparaison des valeurs limites est rempli, **caractérisé en ce que** comme valeurs de la au moins première grandeur de charge, des valeurs se basant sur des teneurs énergétiques thermiques du système de freinage à friction sont déterminées, dans lequel les valeurs de la au moins première grandeur de charge sont déterminées en tant que cumul de différences entre des apports énergétiques dans le premier élément de friction et de chaleur émise par le premier élément de friction.

2. Procédé selon la revendication 1, **caractérisé en ce que** le freinage à une vitesse de véhicule cible du véhicule ou à l'arrêt du véhicule est commandé ou déclenché et est effectué, dans lequel à la vitesse de véhicule cible ou à des vitesses de véhicule du véhicule inférieures à la vitesse de véhicule cible même à des pressions de freinage maximales, des forces de freinage maximales ou des couples de freinage maximaux du système de freinage à friction, une augmentation des valeurs de la au moins première grandeur de charge est exclue lors de la détermination des valeurs de la au moins première grandeur de charge.

3. Procédé selon la revendication 1 ou 2, **caractérisé en ce qu'**un premier critère de comparaison des valeurs limites est alors rempli lorsqu'au moins une première valeur de charge (6) de la au moins première grandeur de charge est égale ou supérieure à une première valeur limite de charge (11).

4. Procédé selon la revendication 3, **caractérisé en ce que** des valeurs d'une deuxième grandeur de charge du système de freinage à friction sont déterminées à partir des pressions de freinage, des forces de freinage ou des couples de freinage et à partir des grandeurs cinématiques, dans lequel la première grandeur de charge et la deuxième grandeur de charge sont des grandeurs physiques de différentes catégories, dans lequel avec les valeurs de la deuxième grandeur de charge sont effectuées des comparaisons de valeurs limites, dans lequel un deuxième critère de comparaison de valeurs limites est alors rempli lorsqu'au moins une deuxième valeur de charge de la deuxième grandeur de charge est égale ou supérieure à une deuxième valeur limite de charge.

5. Procédé selon la revendication 4, **caractérisé en ce que** des valeurs de puissance de frottement du système de freinage à friction sont déterminées en tant que valeurs de la deuxième grandeur de charge.

6. Procédé selon l'une des revendications 3 à 5, **caractérisé en ce que** la première valeur limite de charge (11) est définie d'une manière à ce qu'une somme de la première valeur de charge actuelle (6) et d'une valeur de réserve de charge (7) de la au moins première grandeur de charge, laquelle correspond à une charge escomptée du système de freinage à friction par le freinage, est égale ou inférieure à une valeur limite de charge maximale (13) de la au moins première grandeur de charge.

7. Procédé selon la revendication 6, **caractérisé en ce que** la valeur de réserve de charge (7) est dépendante d'au moins un paramètre de freinage, plus particulièrement dépendante d'un freinage combiné, d'une charge du véhicule ou/et d'une inclinaison de la voie.

8. Procédé selon l'une des revendications 3 à 7, **caractérisé en ce qu'**une limite de vitesse du véhicule en tant que réaction préalable (24) est commandée ou déclenchée lorsqu'au moins la première valeur de charge (6) est égale ou supérieure à une première valeur seuil de charge (25) de la au moins première grandeur de charge, dans lequel la au moins première valeur seuil de charge (25) est inférieure à celle de la première valeur limite de charge (11).

9. Procédé selon la revendication 8, **caractérisé en ce qu'**après un stationnement du véhicule, des valeurs de la au moins première grandeur de charge sont déterminées jusqu'à ce qu'au moins la première valeur de charge (6) soit inférieure à la première valeur seuil de charge (25).

10. Procédé selon l'une des revendications 3 à 9, **caractérisé en ce qu'**au moins la première valeur limite de charge (11) est dépendante d'une vitesse de véhicule du véhicule.

11. Procédé selon l'une des revendications 1 à 10, **caractérisé en ce que** des freinages du véhicule sont affectés à des catégories de grandeurs de charge, lesquelles sont formées à partir d'intervalles de grandeurs de charge, au moins en fonction de valeurs apparaissant pendant les freinages, de la au moins première grandeur de charge.

12. Procédé selon l'une des revendications 3 à 11, **caractérisé en ce qu'**au moins la première valeur de charge (6) et la réaction de protection (12) sont délivrées à un conducteur de véhicule moteur.

13. Procédé selon l'une des revendications 3 à 12, **caractérisé en ce que** la première valeur de charge (6) est enregistrée conjointement avec un marqueur temporel d'une manière à ce que la première valeur de charge (6) et le marqueur temporel puissent être de nouveau accessibles après une période durant laquelle le véhicule est arrêté.

14. Procédé selon l'une des revendications 1 à 13, **caractérisé en ce que** le premier élément de friction est une première roue (40) du véhicule.

15. Dispositif de surveillance de véhicule, configuré pour exécuter le procédé selon l'une des revendications 1 à 14, **caractérisé en ce qu'**au moins deux appareils de surveillance indépendants l'un de l'autre peuvent être reliés au véhicule, dans lequel un premier appareil de surveillance (16) et un deuxième appareil de surveillance (17) sont conçus comme des appareils de commande.

16. Dispositif selon la revendication 15, **caractérisé en ce que** le premier appareil de surveillance (16) peut être relié à un premier dispositif de saisie (50) de pressions de freinage, de forces de freinage ou de couples de freinage d'un système de freinage à friction du véhicule ainsi qu'à un deuxième dispositif de saisie (51) de grandeurs cinématiques du véhicule et le deuxième appareil de surveillance (17) peut être relié à un troisième dispositif de saisie (52) de pressions de freinage, de forces de freinage ou de couples de freinage du système de freinage à friction du véhicule ainsi qu'à un quatrième dispositif de saisie (53) de grandeurs cinématiques du véhicule, dans lequel le premier dispositif de saisie (50) est redondant par rapport au troisième dispositif de saisie (52) et ainsi indépendant de lui et le deuxième dispositif de saisie (51) est redondant par rapport au quatrième dispositif de saisie (53) et ainsi indépendant de lui.

17. Dispositif selon la revendication 15 ou 16, **caractérisé en ce que** le premier appareil de surveillance (16) et le deuxième appareil de surveillance (17) peuvent être reliés à au moins une unité de freinage, plus particulièrement à au moins une première unité de freinage à sabot (44) du véhicule.

18. Dispositif selon l'une des revendications 15 à 17, **caractérisé en ce que** le premier appareil de surveillance (16) et le deuxième appareil de surveillance (17) peuvent être reliés à une boucle de freinage rapide (19) du véhicule.
